# EUROPÄISCHE PATENTSCHRIFT

(11) **EP 0 865 972 B1**
(45) Veröffentlichungstag und Bekanntmachung des Hinweises auf die Patenterteilung: **09.07.2003**
(21) Anmeldenummer: 98102914.3
(22) Anmeldetag: 19.02.1998
(51) Int. Cl.: B60R 21/16

(54) **Gassack**
Airbag
Coussin gonflable

(30) Priorität: 18.03.1997 DE 29704975 U
(43) Veröffentlichungstag der Anmeldung: 23.09.1998
(73) Patentinhaber: TRW Occupant Restraint Systems GmbH & Co. KG, 73551 Alfdorf (DE)
(72) Erfinder: Spary, Anton, 73577 Ruppertshofen (DE)
(74) Vertreter: Degwert, Hartmut, Dipl.-Phys.

(56) Entgegenhaltungen:
- DE-U- 29 613 781
- GB-A- 2 297 950

## Beschreibung

Die Erfindung betrifft einen Gassack mit wenigstens einer aus textilen Wandungsteilen gebildeten aufblasbaren Kammer und einem diese Kammer berandenden Saum. Ein solcher Gassack ist aus dem gattungsbildenden Dokument DE-U- 296 13 781 bekannt.

Der aufblasbare Gassack eines Fahrzeuginsassen-Schutzsystems wird im zusammengefalteten Zustand hinter einer Abdeckung oder Verkleidung im Fahrzeug aufbewahrt. Die Faltung eines Gassacks muß gewährleisten, daß dieser sich beim Aufblasen frei entfalten kann. Diese Forderung führt besonders bei größeren Gassäcken von unregelmäßiger Gestalt zu aufwendigen Faltungsprozessen, deren Automatisierung auf Schwierigkeiten stößt.

Durch die Erfindung wird ein Gassack bereitgestellt, der mit einem Hilfsmittel ausgestattet ist, welches das Verstauen oder Falten in einem Gehäuse oder dergleichen erheblich erleichtert. Gemäß der Erfindung mit den Merkmalen des Anspruchs 1 sind in wenigstens einem Saumbereich des Gassacks Führungselemente für ein parallel zur Längsrichtung des Saumbereichs angeordnetes Zugmittel vorgesehen; dieses Zugmittel ist an einem Endbereich des Saumbereichs befestigt. Durch Ausüben von Zug auf das freie Ende des Zugmittels können die textilen Wandungsteile des Gassacks in ein Gehäuse, Aufnahmefach oder dergleichen hineingezogen werden, wobei sie gerafft oder gefaltet werden. Dabei bildet der Boden des Gehäuses einen Gegenhalt für denjenigen Teil des Gassacks, an welchem das Zugmittel befestigt ist. Besonders vorteilhaft ist diese Ausbildung des Gassacks, wenn er im zusammengelegten Zustand eine langgestreckte Form aufweist. Dies ist der Fall bei sogenannten A-C-Seitenairbags, also aufblasbaren Schutzkissen, die sich von der A-Säule über die B- bis zur C-Säule erstrecken und im aufgeblasenen Zustand die Seitenfenster des Fahrzeugs abdecken. Bei einer solchen Ausführung des Gassacks sind über dessen Länge mehrere Zugmittel verteilt. Durch gleichzeitiges Ausüben von Zug an den freien Enden der Zugmittel wird der langgestreckte Gassack in ein im Querschnitt U-förmiges Aufnahmegehäuse hineingezogen, wobei er zugleich gefaltet wird.

Eine kontrollierte Faltung nach Art einer Raffung wird durch mehrere im Saum quer zur Längsrichtung des Zugmittels angebrachte Schlitze erreicht, durch die das Zugmittel auf abwechselnden Seiten des Saumes geführt ist. Nachdem die textile Wandung des Gassacks durch Zugausübung am Zugmittel in den gefalteten Zustand überführt ist, kann dieser Zustand während der Montage im Fahrzeug gesichert werden, indem das unter Zugspannung stehende Zugmittel an dem den gefalteten Gassack aufnehmenden Gehäuse festgelegt, beispielsweise eingehakt wird.

Weitere Merkmale und Vorteile der Erfindung ergeben sich aus der folgenden Beschreibung mehrerer Ausführungsbeispiele und aus der Zeichnung, auf die Bezug genommen wird. In der Zeichnung zeigen:
- Figur 1 einen flach ausgebreitet dargestellten Gassack eines Fahrzeuginsassen-Schutzsystems;
- Figur 2 den Gassack nach Figur 1 im zusammengefalteten Zustand;
- Figur 3 einen Querschnitt durch den zusammengefalteten Gassack und ein diesen aufnehmendes Gehäuse;
- Figur 4 die in Figur 1 mit A bezeichnete Einzelheit in größerem Maßstab; und
- Figur 5 eine Schnittansicht entlang der Linie V-V in Figur 4.

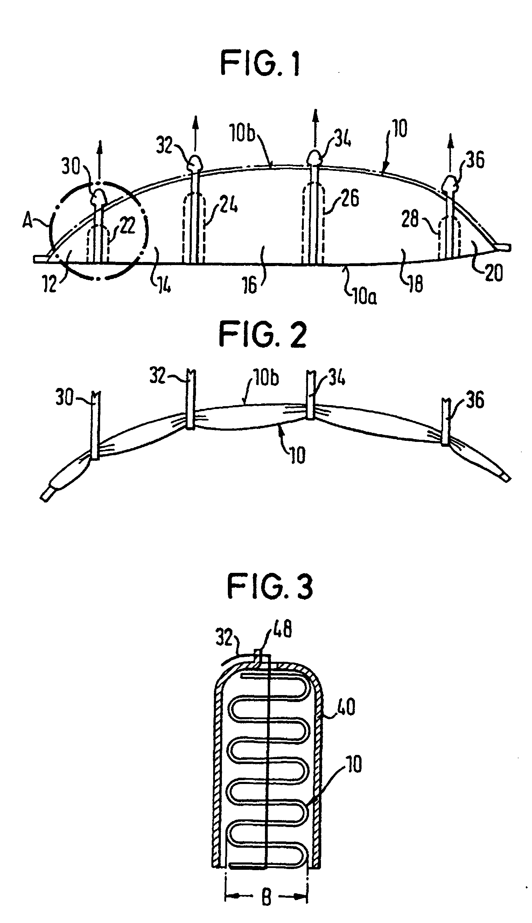

Der in Figur 1 im flach ausgebreiteten Zustand dargestellte Gassack 10 erstreckt sich im Fahrzeug von der A-Säule bis zur C-Säule und deckt die Seitenscheiben sowie den B-Pfosten des Fahrzeugs ab. Seine aufblasbare Kammer besteht aus mehreren, miteinander in Strömungsverbindung stehenden Kammerabteilen 12, 14, 16, 18, 20. Benachbarte Kammerabteile sind jeweils durch einen Saum 22, 24, 26, 28 getrennt, der sich von dem unteren Rand 10a des Gassacks ausgehend bis nahe an den oberen Rand 10b erstreckt, jedoch kurz vor diesem endet, so daß zwischen dem Ende jedes Saumes und dem oberen Rand 10b des Gassacks 10 ein Verbindungskanal zwischen benachbarten Kammerabteilen verbleibt. Der Saum 22, 24, 26, 28 kann abgenäht, verklebt oder durch Verweben der zwei übereinanderliegenden textilen Wandungsteile des Gassacks gebildet sein.

An jedem Saum 22, 24, 26, 28 ist nahe dem unteren Rand 10a des Gassacks 10 ein Zugband 30, 32, 34, 36 befestigt. Jedes Zugband 30, 32, 34, 36 erstreckt sich in Längsrichtung des zugehörigen Saumes 22, 24, 26 bzw. 28. Die freien Enden der Zugbänder 30, 32, 34, 36 stehen über den oberen Rand 10b des Gassacks 10 hinaus. Sie sind mit einer dreieckförmigen Verbreiterung versehen, die das Aufbringen einer Zugspannung auf das entsprechende Zugband erleichtert.

Figur 3 zeigt ein im Querschnitt U-förmiges Gehäuse 40, das zur Aufnahme des gefalteten Gassacks 10 dient und sich über die gesamte Länge des Gassacks erstreckt. Es ist in die Dachkonstruktion des Fahrzeugs integriert und hat eine entsprechend der oberen Berandung der Seitenfenster gekrümmte, langgestreckte Form.

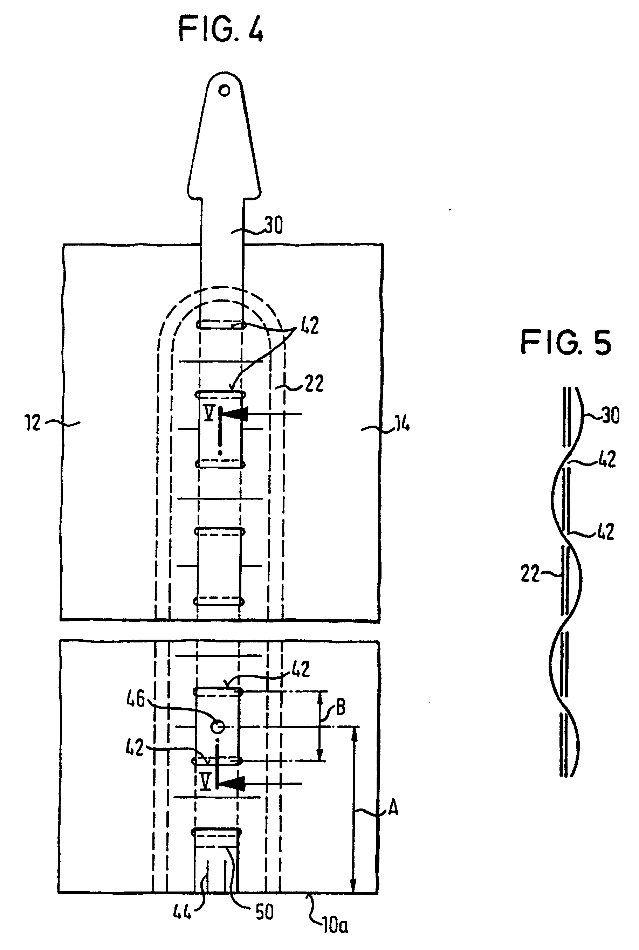

Die Figuren 4 und 5 zeigen Einzelheiten der Ausbildung des Saumes 22 und des Zugbandes 30.

Der die Kammerabteile 12, 14 voneinander abgrenzende Saum 22, wie auch alle anderen Säume 24, 26, 28, ist mit einer Vielzahl von Schlitzen 42 versehen, durch die sich das Zugband 30 auf abwechselnden Seiten des Saumes erstreckt. Die Schlitze 42 sind quer zur Längsrichtung des Saumes 22 orientiert und gleichmäßig über dessen gesamte Länge beabstandet. Ein Ende des Zugbandes 30 ist bei 44 nahe dem unteren Rand 10a des Gassacks 10 am Saum 22 befestigt, beispielsweise angenäht.

Um den in Figur 1 flach ausgebreitet gezeigten Gassack 10 in den in Figur 2 gezeigten, gerafften oder gefalteten Zustand zu überführen, wird gleichzeitig auf die freien Enden der Zugbänder 30 bis 36 in Richtung der in Figur 1 eingezeichneten Pfeile ein Zug ausgeübt, während der obere Rand 10b des Gassacks am Boden des Gehäuses 40 einen Gegenhalt findet. Wie aus Figur 3 ersichtlich ist, sind die Zugbänder 30 bis 36 jeweils durch einen Schlitz am Boden des Gehäuses 40 nach außen geführt. Da die Zugbänder 30 bis 36 durch die Schlitze 42 geführt sind und auf abwechselnden Seiten des Gassacks verlaufen, wird durch Zugausübung auf die Zugbänder eine kontrollierte Faltung des Gassacks herbeigeführt. Der Abstand zwischen zwei benachbarten Schlitzen 42 ist in Figur 4 mit B bezeichnet; er bestimmt die Breite B des innerhalb des Gehäuses 40 gefalteten Gassacks 10, wie mit einfachen geometrischen Betrachtungen gezeigt werden kann.

Im Abstand A vom unteren Rand 10a des Gassacks 10 ist jedes Zugband 30 bis 36 mit einem Loch 46 versehen. An diesem Loch 46 wird das betreffende Zugband auf einer herausgebogenen Fahne 48 an der Außenseite des Gehäuses 40 eingehakt. Die Zugbänder 30 bis 36 verbleiben so unter Spannung, um den gefalteten Zustand des Gassacks im Inneren des Gehäuses 40 während der Montage im Fahrzeug zu sichern. Nach Fertigstellung der Montage ist das offene Ende des im Querschnitt U-förmigen Gehäuses 40 durch eine Abdeckung verschlossen, die auch den Gassack im Inneren des Gehäuses hält. Die Zugbänder 30 bis 36 können nun von den abstehenden Fahnen 48 am Boden des Gehäuses 40 gelöst werden, um später bei Aktivierung des Gassacks dessen Entfaltung nicht zu behindern. Alternativ ist jedes Zugband 30 bis 36 mit einer quer verlaufenden Soll-Reißlinie 50 versehen, an der es unter dem Dehnungsdruck des sich entfaltenden Gassacks abreißt.

Die Anwendung der Erfindung ist besonders bei Gassäcken von Vorteil, die im gefalteten Zustand eine langgestreckte Form haben. Aber auch bei anders geformten Gassäcken, auch solchen mit nur einer einzigen durchgehenden Kammer, kann die Erfindung mit Vorteil angewendet werden, um auf einfachste Weise eine kontrollierte Faltung des Gassacks herbeizuführen.

## Patentansprüche

1. Gassack mit wenigstens einer aus textilen Wandungsteilen gebildeten aufblasbaren Kammer (12, 14, 16, 18, 20) und einem diese Kammer berandenden Saum (22, 24, 26, 28), **dadurch gekennzeichnet, daß** in wenigstens einem Saumbereich, der sich von dem unteren Rand (10a) des Gassacks ausgehend bis nahe an den oberen Rand (10b) erstreckt, Führungselemente (42) für ein parallel zur Längsrichtung des Saumbereichs angeordnetes Zugmittel (30, 32, 34, 36) vorgesehen sind und das Zugmittel an einem Endbereich des Saumbereichs (22, 24, 26, 28) befestigt ist.

2. Gassack nach Anspruch 1, **dadurch gekennzeichnet, daß** er durch Ausübung von Zug auf das freie Ende des Zugmittels (30, 32, 34, 36) und Gegenhalt in einem der Befestigung des Zugmittels am Saum gegenüberliegenden Bereich in einen gefalteten Zustand überführt ist.

3. Gassack nach Anspruch 2, **dadurch gekennzeichnet, daß** der Gegenhalt durch ein den gefalteten Gassack aufnehmendes Gehäuse (40) erfolgt.

4. Gassack nach Anspruch 3, **dadurch gekennzeichnet, daß** er im gefalteten Zustand eine langgestreckte Form aufweist und seine Faltung durch Zugausübung auf mehrere über seine Länge verteilte Zugmittel (30, 32, 34, 36) herbeigeführt ist.

5. Gassack nach Anspruch 4, **dadurch gekennzeichnet, daß** die aufblasbare Kammer durch mehrere Saumstreifen (22, 24, 26, 28) in einzelne Kammerabteile (12, 14, 16, 18, 20) aufgeteilt ist und je ein Zugmittel (30, 32, 34, 36) entlang einem der Saumstreifen angeordnet ist

6. Gassack nach einem der Ansprüche 1 bis 5, **dadurch gekennzeichnet, daß** die Führungselemente durch quer zur Längsrichtung des Saumes in diesem angebrachte Schlitze (42) gebildet sind, durch die sich das bandförmige Zugmittel (30, 32, 34, 36) auf abwechselnden Seiten der Wandungsteile des Gassacks erstreckt.

7. Gassack nach einem der Ansprüche 3 bis 6, **dadurch gekennzeichnet, daß** an dem Zugmittel ein Rast-, Sperr- oder Halteelement (46) vorgesehen ist, das an einem entsprechenden Gegenelement (48) des Gehäuses (40) angreift und das Zugmittel (32) im gespannten Zustand hält.

8. Gassack nach Anspruch 7, **dadurch gekennzeichnet, daß** das Zugmittel mit einer quer zur Längsrichtung orientierten Soll-Reißlinie (50) versehen ist.

## Claims

1. A gas bag comprising at least one inflatable chamber (12, 14, 16, 18, 20) formed from textile wall pieces, and a seam (22, 24, 26, 28) edging this chamber, **characterized in that** in at least one seam region, which extends starting from the lower edge (10a) of the gas bag up to close to the upper edge (10b), guide elements (42) are provided for a traction means (30, 32, 34, 36) arranged parallel to the longitudinal direction of the seam region, and the traction means is attached to an end region of the seam region (22, 24, 26, 28).

2. The gas bag according to Claim 1, **characterized in that** it is transferred into a folded state by the exertion of traction on the free end of the traction means (30, 32, 34, 36) and support in a region opposite the attachment of the traction means to the seam.

3. The gas bag according to Claim 2, **characterized in that** the support is effected by a housing (40) receiving the folded gas bag.

4. The gas bag according to Claim 3, **characterized in that** it has an elongated shape in the folded state and its folding is brought about by exerting traction on a plurality of traction means (30, 32, 34, 36) distributed over its length.

5. The gas bag according to Claim 4, **characterized in that** the inflatable chamber is divided into individual chamber compartments (12, 14, 16, 18, 20) by a plurality of seam strips (22, 24, 26, 28) and each of the traction means (30, 32, 34, 36) is arranged along one of the seam strips.

6. The gas bag according to any of Claims 1 to 5, **characterized in that** the guide elements are formed by slits (42) which are applied in the seam transversely to the longitudinal direction thereof and through which the band-shaped traction means (30, 32, 34, 36) extends on alternate sides of the wall pieces of the gas bag.

7. The gas bag according to any of Claims 3 to 6, **characterized in that** provided on the traction means is a catch, locking or holding element (46), which engages on a corresponding counter element (48) of the housing (40) and holds the traction means (32) in the tensioned state.

8. The gas bag according to Claim 7, **characterized in that** the traction means is provided with a predetermined tear line (50) oriented transversely to the longitudinal direction.

## Revendications

1. Coussin à gaz comportant au moins une chambre (12, 14, 16, 18, 20) gonflable, formée à partir de parties de parois textiles, et une lisière (22, 24, 26, 28) bordant cette chambre, **caractérisé en ce que** dans au moins une région de lisière qui s'étend en partant depuis le bord inférieur (10a) du coussin à gaz jusque près du bord supérieur (10b), il est prévu des éléments de guidage (42) pour un moyen de traction (30, 32, 34, 36) agencé parallèlement à la direction longitudinale de la lisière, et le moyen de traction est fixé sur une région d'extrémité de la région de lisière (22, 24, 26, 28).

2. Coussin à gaz selon la revendication 1, **caractérisé en ce qu'**il est amené dans un état de pliage en exerçant une traction sur l'extrémité libre du moyen de traction (30, 32, 35, 36) et une retenue antagoniste dans une région opposée à la fixation du moyen de traction sur la lisière.

3. Coussin à gaz selon la revendication 2, **caractérisé en ce que** la retenue antagoniste est produite par un boîtier (40) recevant le coussin à gaz plié.

4. Coussin à gaz selon la revendication 3, **caractérisé en ce qu'**il présente à l'état plié une forme allongée et son pliage est causé par une traction exercée sur plusieurs moyens de traction (30, 32, 34, 36) répartis sur sa longueur.

5. Coussin à gaz selon la revendication 4, **caractérisé en ce que** la chambre gonflable est divisée par plusieurs bandes de lisière (22, 24, 26, 28) en des compartiments individuels (12, 14, 16, 18, 20), et un moyen de traction respectif (30, 32, 34, 36) est agencé le long de l'une des bandes de lisière.

6. Coussin à gaz selon l'une des revendications 1 à 5, **caractérisé en ce que** les éléments de guidage sont formés par des fentes (42) ménagées dans la lisière transversalement à la direction longitudinale de celle-ci et à travers lesquelles le moyen de traction en forme de ruban (30, 32, 34, 36) s'étend sur des côtés alternants des parties de paroi du coussin à gaz.

7. Coussin à gaz selon l'une des revendications 3 à 6, **caractérisé en ce qu'**il est prévu sur le moyen de traction un élément d'enclenchement, de blocage ou de retenue (46) qui attaque un élément antagoniste (48) correspondant du boîtier (40) et qui retient le moyen de traction (32) à l'état tendu.

8. Coussin à gaz selon la revendication 7, **caractérisé en ce que** le moyen de traction est pourvu d'une ligne de déchirure de consigne orientée transversalement à la direction longitudinale.
